# EUROPÄISCHE PATENTANMELDUNG

(11) **EP 3 527 470 A1**
(43) Veröffentlichungstag der Anmeldung: **21.08.2019**
(21) Anmeldenummer: 19157968.9
(22) Anmeldetag: 19.02.2019
(51) Int. Cl.: B62J 9/00, B62K 5/02, B62K 7/00

(54) **TRANSPORTFAHRRAD UND TRANSPORTBOX**

(30) Priorität: 19.02.2018 DE 202018000822 U
(71) Anmelder: Speedliner Mobility AG, 28209 Bremen (DE)
(72) Erfinder: Schaar, Werner, 67160 Wissembourg (FR); Kruse, Arne, 27798 Hude (DE)
(74) Vertreter: Isarpatent

(57) **Zusammenfassung**

Ein Transportfahrrad weist zumindest eine Transportbox zur Aufnahme von Transportgütern auf, wobei die Transportgüter in mindestens einer Transportkiste innerhalb der Transportbox angeordnet sind. Dabei hat die Transportbox eine zumindest abschnittsweise aufschwenkbare Abdeckung zum Be- und Entladen. Dadurch können sowohl die Transportkisten wie auch die darin aufgenommenen Transportgüter einfach be- und entladen werden.

## Beschreibung

Die vorliegende Erfindung betrifft ein Transportfahrrad gemäß dem Oberbegriff des Anspruchs 1 sowie eine Transportbox gemäß dem Oberbegriff des Anspruchs 18.

Transport- und Lastenfahrräder erfreuen sich als leicht zu handhabendes, emissionsfreies Transportmittel großer Beliebtheit. Für unterschiedliche Einsatzfelder sind besonders geeignete Fahrradtypen verfügbar. Ein als dreirädriges Lastenfahrrad ausgebildetes Fahrrad ist aus dem deutschen Gebrauchsmuster DE 20 2005 010 716 U1 bekannt. Hierzu gehören u.a. für den Transport von Transportgütern, wie beispielsweise von Versandartikeln, insbesondere Postbriefe und Pakete optimierte Fahrräder in verschiedenen Ausführungen.

Transport- und Lastenfahrräder weisen regelmäßig eine oder mehrere Transportboxen zur Aufnahme der Transportgüter auf. Hierbei werden die Transportgüter in Transportkisten innerhalb der Transportbox aufbewahrt.

Nachteilig ist hierbei, dass die innerhalb der Transportbox gelagerten Transportgüter nur schlecht erreichbar bzw. entnehmbar sind.

Der Erfindung liegt daher die Aufgabe zugrunde, ein Fahrradkonzept bereitzustellen, welches eine Transportbox mit darin aufgenommenen, leicht erreichbaren bzw. entnehmbaren Transportkisten aufweist.

Diese Aufgabe wird durch ein Transportfahrrad mit der Merkmalskombination des Anspruchs 1 sowie eine Transportbox mit der Merkmalskombination des Anspruchs 18 gelöst.

Ein erfindungsgemäßes Transportfahrrad weist zumindest eine Transportbox zur Aufnahme von Transportgütern auf, wobei die Transportgüter in mindestens einer Transportkiste innerhalb der Transportbox angeordnet sind. Erfindungsgemäß hat die Transportbox eine zumindest abschnittsweise aufschwenkbare Abdeckung zum Be- und Entladen. Dadurch können sowohl die Transportkisten wie auch die darin aufgenommenen Transportgüter einfach Be- und Entladen werden.

Zumindest eine Transportbox weist vorzugsweise zumindest zwei mindestens abschnittsweise aufschwenkbare Abdeckungen zur Entnahme der Transportgüter auf.

Als besonders vorteilhaft hat es sich erwiesen, wenn das Transportfahrrad zumindest eine vordere Transportbox und mindestens eine hintere Transportbox aufweist. Vorzugsweise hat das Fahrrad eine vordere Transportbox und eine hintere Transportbox.

Bei einem besonders bevorzugten Ausführungsbeispiel weist das Transportfahrrad ein Vorderrad und zwei Hinterräder auf, wobei die hintere Transportbox im Bereich zwischen den Hinterrädern angeordnet ist.

Vorzugsweise hat die Transportbox eine in Fahrtrichtung hintere Zugriffsöffnung mit zumindest einer Abdeckung und eine an der Oberseite angeordnete Zugriffsöffnung mit mindestens einer Abdeckung.

Die hintere Zugriffsöffnung weist vorzugsweise eine obere, nach oben schwenkbare Abdeckung und eine untere, nach unten aufschwenkbare Abdeckung auf. Eine zweigeteilte Ladeklappe ist vorzugsweise ausgebildet. Die obere Abdeckung überlappt bei einer Ausführungsvariante die untere Abdeckung abschnittsweise und hält diese geschlossen. Zum Öffnen kann die obere Abdeckung zunächst entriegelt und anschließend nach oben geschwenkt und auf der Oberseite der Transportbox abgelegt werden. Anschließend wird die nun freigegebene untere Abdeckung nach unten aufgeschwenkt.

Die Abdeckungen können mit einem Schloss mit Schlüssel geöffnet und verriegelt werden.

Gemäß einer bevorzugten Ausführungsform ist die an der Oberseite ausgebildete Zugriffsöffnung mittels zwei Abdeckungen verschließbar. Die Schwenkachse der Abdeckungen ist vorzugsweise mittig in Längsrichtung der Transportbox angeordnet.

Bei einer alternativen Ausführungsvariante weist die an der Oberseite ausgebildete Zugriffsöffnung eine faltbare obere Abdeckung auf. Vorzugsweise sind drei Faltabschnitte vorgesehen.

Als besonders vorteilhaft hat es sich erwiesen, wenn die hintere Transportbox zumindest zwei horizontal übereinander angeordnete Lagerebenen zur Aufnahme von Transportkisten aufweist.

Vorzugsweise sind in zumindest einer der Lagerebenen zumindest zwei Transportkisten benachbart hintereinander angeordnet.

Hierbei können vorteilhafterweise zwei in Fahrtrichtung vordere Transportkisten in Längsrichtung nebeneinander angeordnet sein.

Eine in Fahrtrichtung hintere Transportkiste ist vorzugsweise quer zur Fahrtrichtung angeordnet.

Bei einem besonders vorteilhaften Ausführungsbeispiel des Transportfahrrads weist die Transportbox zumindest eine Zuglasche auf, wobei die Transportkiste von der Zuglasche abschnittsweise umgriffen und mittels dieser aus der Transportbox herausziehbar ist. Die Zuglasche ist vorzugsweise als Gurtband ausgebildet.

Die vordere Transportbox ist vorzugsweise zur Aufnahme von zumindest zwei Transportkisten ausgebildet. Als vorteilhaft hat es sich erwiesen, wenn die zwei Transportkisten in Längsrichtung zur Fahrrichtung ausgerichtet, nebeneinander angeordnet sind.

Bei einer besonders bevorzugten Ausführung des Transportfahrrads weist die vordere Transportbox eine in Fahrtrichtung vorne angeordnete, sich über die gesamte Breite der Transportbox erstreckende erste Abdeckung auf. Der große Deckel an der Vorderseite ist ideal zum Be- und Entladen des Gepäckträgers.

Vorzugsweise sind ferner zwei benachbart hinter dieser ersten Abdeckung angeordnete weitere Abdeckungen vorgesehen. Die beiden hinteren Deckel vor dem Lenker dienen bei einer Ausbildung zum Posttransport der Entnahme der Briefe. Diese dann als vordere Postbox ausgebildete Transportbox bietet vorzugsweise einen Stauraum für zwei Kunststoffboxen und besitzt drei aufklappbare Deckel.

Die Abdeckungen der Transportbox sind vorzugsweise mittels Druckverschlüssen arretierbar. Die Druckverschlüssen sind vorteilhafterweise als Druckknöpfe ausgeführt.

Eine erfindungsgemäße Transportbox für ein Transportfahrrad weist eine zumindest abschnittsweise aufschwenkbare Abdeckung zum Be- und Entladen auf.

Die Transportkisten sind vorzugsweise als Kunststoffboxen, insbesondere Kunststoffkisten ausgebildet.

Bei einer bevorzugten Ausführungsform weist die Transportbox zwei seitliche Rutschbegrenzungen auf. Dadurch sind die Transportkisten gegen unbeabsichtigtes Verrutschen gesichert.

Weitere bevorzugte Ausführungsformen sind Gegenstand der Unteransprüche.

Im Folgenden werden bevorzugte Ausführungsformen der vorliegenden Erfindung unter Bezugnahme auf die beiliegenden Zeichnungen näher erläutert. Dabei zeigen die Zeichnungen im Einzelnen:
Figur 1 eine Seitenansicht eines erfindungsgemäßen Transportfahrrads,
Figur 2 bis 6 jeweils eine Detaildarstellung der vorderen Transportbox aus Figur 1,
Figuren 7 und 8 Detaildarstellungen der hinteren Transportbox aus Figur 1,
Figuren 9 und 10 Innenraumansichten der hinteren Transportbox aus Figur 1,
Figuren 11 bis 14 Detaildarstellungen der hinteren Transportbox aus Figur 1 und
Figuren 15, 16 und 17 eine alternative Ausführungsvariante der hinteren Transportbox.

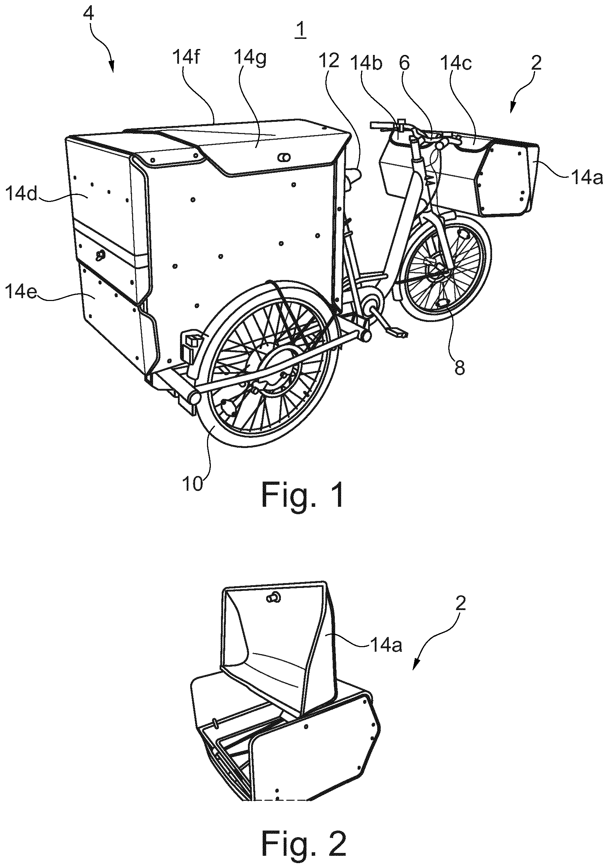

Figur 1 zeigt eine schematische Seitenansicht eines Transportfahrrads 1 mit einer vorderen Transportbox 2 und einer hinteren Transportbox 4. Die vordere Transportbox 2 ist vor dem Fahrradlenker 6 angeordnet. Das Transportfahrrad 1 weist ein Vorderrad 8 und zwei Hinterräder 10 auf, wobei die hintere Transportbox 4 im Bereich zwischen den beiden Hinterrädern 10 und hinter dem Fahrradsitz 12 angeordnet ist.

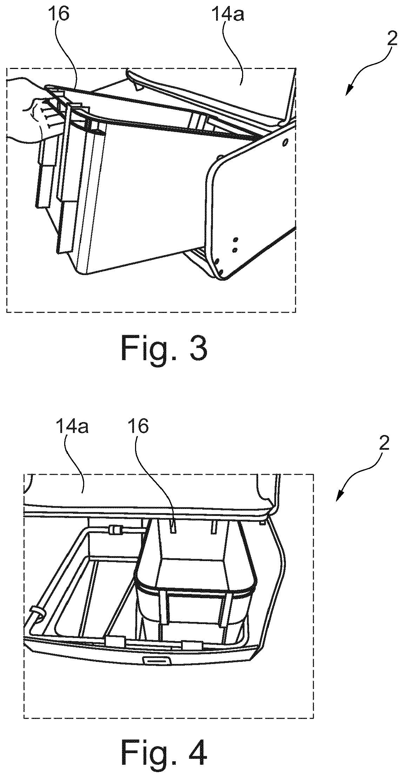

Die Transportboxen weisen aufschwenkbare Abdeckungen 14a-g zum Be- und Entladen auf. Dadurch können sowohl Transportkisten 16 (siehe Figur 3 ff.) wie auch die darin aufgenommenen Transportgüter einfach Be- und Entladen werden. Die Abdeckungen 14a-g der vorderen und hinteren Transportbox 2, 4 sind mittels als Druckknöpfe ausgebildeten Druckverschlüssen arretierbar.

Die vordere Transportbox 2 weist eine in Fahrtrichtung vorne angeordnete, sich über die gesamte Breite der Transportbox erstreckende erste Abdeckung 14a auf. Der große Deckel 14a an der Vorderseite ist ideal zum Be- und Entladen des Gepäckträgers. Ferner sind zwei benachbart hinter dieser ersten Abdeckung angeordnete weitere Abdeckungen 14b, 14c vorgesehen. Die beiden hinteren Deckel 14b, 14c vor dem Lenker 6 dienen bei einer Ausbildung zum Posttransport der Entnahme von Briefen. Diese dann als vordere Postbox ausgebildete Transportbox bietet einen Stauraum für zwei Transportkisten bzw. Kunststoffboxen 16 und besitzt drei aufklappbare Abdeckungen bzw. Deckel 14a-c.

Figur 2 zeigt eine Detaildarstellung der vorderen Transportbox 2 des Transportfahrrads aus Figur 1 mit geöffneter vorderer, erster Abdeckung 14a. Die Abdeckung 14a ist derart nach oben verschwenkt, dass diese etwa senkrecht verläuft und eine Vorderseite sowie die vordere Hälfte der Oberseite freigibt. Dadurch können Transportkisten 16 einfach be- und entladen werden.

Gemäß den Figuren 3 und 4 ist die vordere Transportbox 2 zur Aufnahme von zwei Transportkisten 16 ausgebildet, die in Längsrichtung zur Fahrrichtung ausgerichtet, nebeneinander angeordnet sind (lediglich eine Transportkiste ist exemplarisch dargestellt). Figur 3 zeigt die Transportbox 2 beim Be- oder Entladen einer der Transportkisten 16 und Figur 3 mit einer Transportkiste 16 beladen. Zum Entladen werden die Vorderkanten der Transportkisten 16 leicht angewinkelt und über die vordere Schwelle der Transportbox 2 gehoben und die Box entnommen. Das Beladen erfolgt mittels leicht angewinkeltem Einschieben der Transportkisten 16.

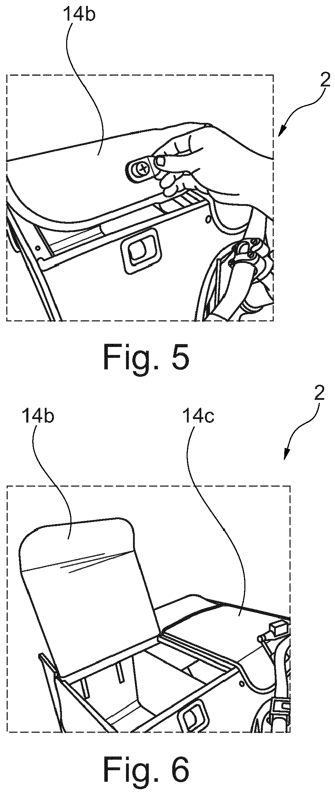

Die Figuren 5 und 6 zeigen eine Detaildarstellung der vorderen Transportbox 2 während dem Aufschwenken einer der beiden hinteren Abdeckungen 14b. Die beiden Abdeckungen 14b und 14c sind etwa gleich breit. Gemäß Figur 6 ist die linke Abdeckung 14b zur Entnahme der Transportgüter aufgeschenkt und die rechte Abdeckung 14c verschlossen.

Gemäß Figur 1 hat die hintere Transportbox 4 eine in Fahrtrichtung hintere Zugriffsöffnung mit Abdeckungen 14d und 14e und eine an der Oberseite angeordnete Zugriffsöffnung mit Abdeckungen 14f und 14g. Die hintere Zugriffsöffnung weist eine obere, nach oben schwenkbare Abdeckung 14d und eine untere, nach unten aufschwenkbare Abdeckung 14e auf. Eine zweigeteilte Ladeklappe ist ausgebildet. Die obere Abdeckung 14d überlappt die untere Abdeckung 14e abschnittsweise und hält diese geschlossen.

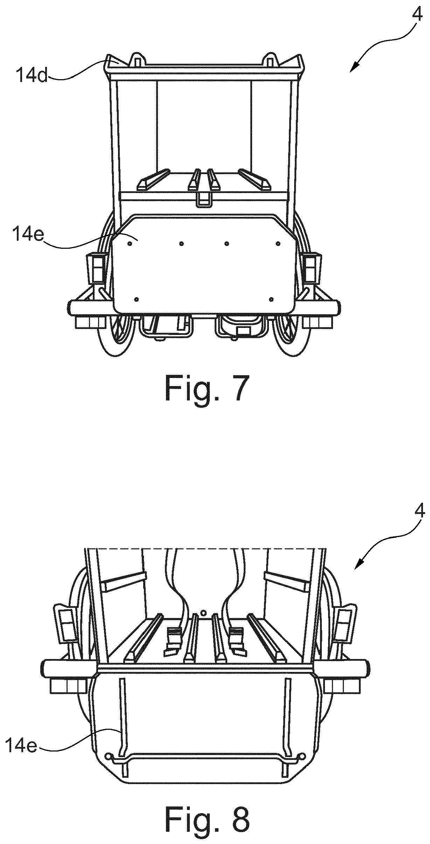

Die Figuren 7 und 8 zeigen Detaildarstellungen der hinteren Transportbox 4 aus Figur 1. Zum Öffnen wird die obere Abdeckung 14d zunächst entriegelt und anschließend, wie in Figur 7 dargestellt, nach oben geschwenkt und auf der Oberseite der Transportbox 4 abgelegt. Wie in Figur 8 dargestellt, wird anschließend die nun freigegebene untere Abdeckung 14e nach unten aufgeschwenkt. Die Abdeckungen können mit einem Schloss mit Schlüssel geöffnet und verriegelt werden.

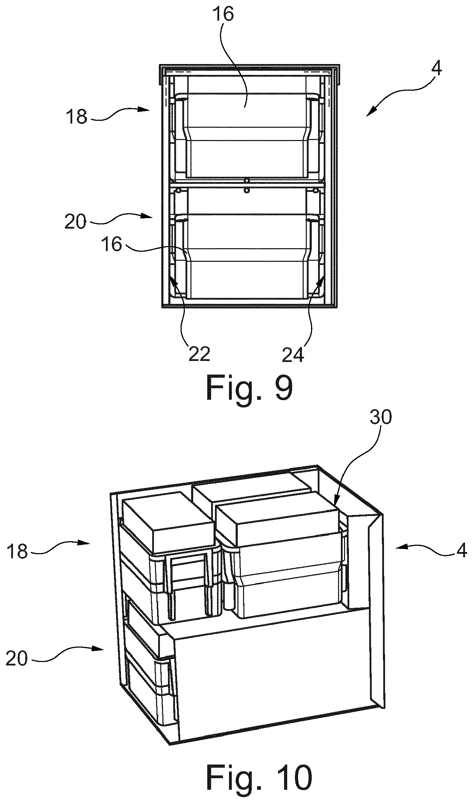

Gemäß der Figuren 9 und 10, welche Innenraumansichten der hinteren Transportbox 4 zeigen, weist die hintere Transportbox 4 zwei horizontal übereinander angeordnete Lagerebenen 18, 20 zur Aufnahme von Transportkisten 16 auf. In den Lagerebenen 18, 20 sind jeweils zwei Transportkisten 16 benachbart hintereinander angeordnet. Hierbei sind vorteilhafterweise zwei in Fahrtrichtung vordere Transportkisten 16 in Längsrichtung nebeneinander angeordnet. Eine in Fahrtrichtung hintere Transportkiste 16 ist quer zur Fahrtrichtung angeordnet. Die Transportkisten 16 sind als Kunststoffboxen bzw. Kunststoffkisten ausgebildet. Die Transportbox 4 weist zwei seitliche Rutschbegrenzungen 22, 24 auf. Dadurch sind die Transportkisten 16 gegen unbeabsichtigtes Verrutschen gesichert.

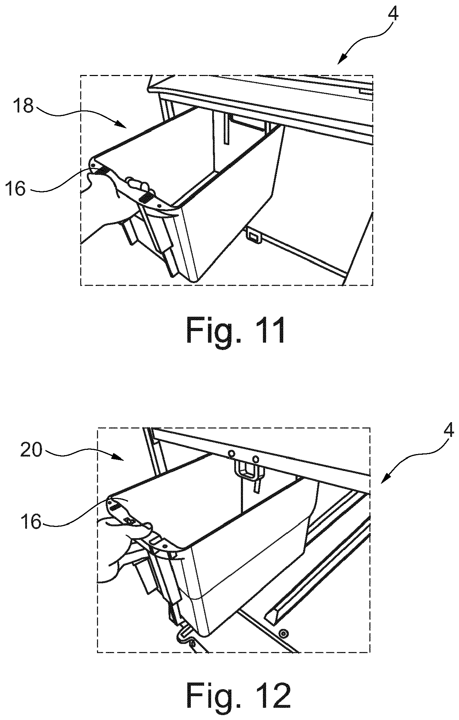

Die Figuren 11 und 12 zeigen Detaildarstellungen der hinteren Transportbox 4 beim Beladen der oberen und unteren Lagerebenen 18, 20.

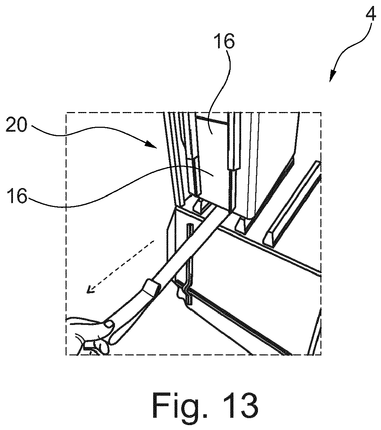

Gemäß der Detaildarstellung der hinteren Transportbox 4 in Figur 13 ist die Transportbox mit Zuglaschen 16 versehen, wobei die Transportkisten 16 in der unteren, hinteren Reihe von einer linken bzw. rechten Zuglasche abschnittsweise umgriffen und mittels dieser in Pfeilrichtung aus der Transportbox herausziehbar sind. Die Zuglaschen 26 sind jeweils als Gurtband ausgebildet.

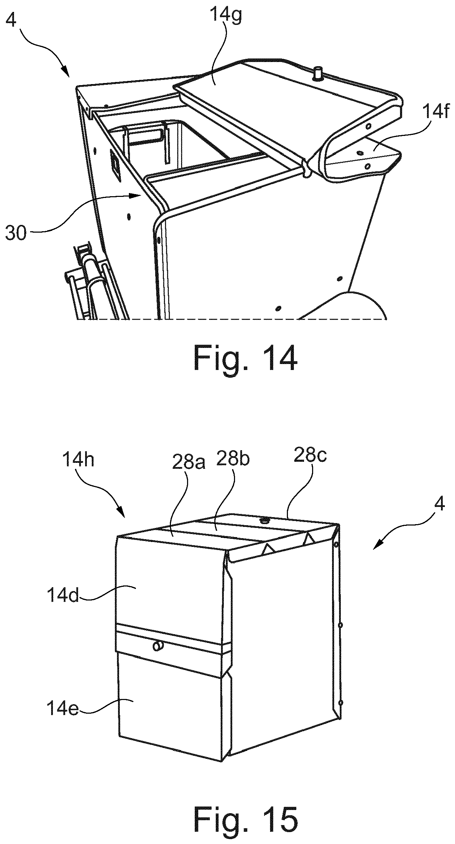

Gemäß der Detaildarstellung der hinteren Transportbox 4 in Figur 14 ist die an der Oberseite ausgebildete Zugriffsöffnung mittels zwei Abdeckungen 14f, 14g verschließbar. Die Schwenkachse der Abdeckungen 14f, 14g ist etwa mittig in Längsrichtung der Transportbox 4 angeordnet. Hierbei ist die rechte Abdeckung 14g exemplarisch aufgeschwenkt dargestellt und die linke Abdeckung 14f geschlossen. Vor dem Kistenbereich ist ein Ablagefach 30 integriert. Dieses dient insbesondere zur Ablage von persönlichen Utensilien des Postzustellers.

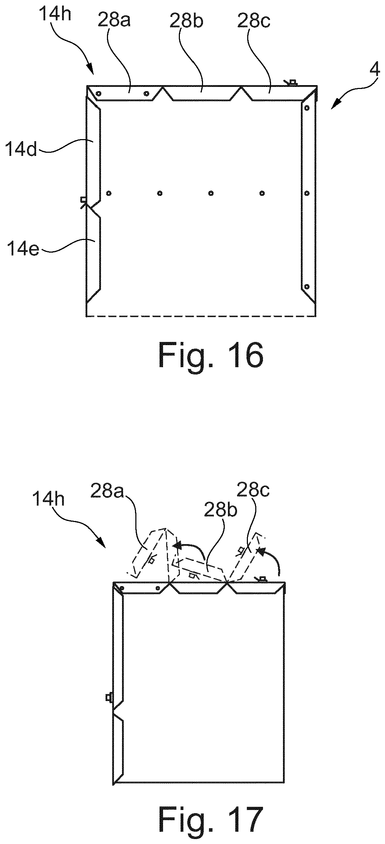

Bei einer in den Figuren 15, 16 und 17 dargestellten alternativen Ausführungsvariante der hinteren Transportbox 4 weist die an der Oberseite ausgebildete Zugriffsöffnung eine faltbare obere Abdeckung 14h auf. Hierbei sind drei Faltabschnitte 28a, 28b und 28c vorgesehen. Die Faltabschnitte 28a, 28b und 28c werden gemäß Figur 17 zum Öffnen der Transportbox 4 von in Fahrtrichtung vorne nach hinten segmentweise aufeinander abgerollt und abgelegt (siehe Pfeilrichtung).

Offenbart ist ein Transportfahrrad 1 mit zumindest einer Transportbox 2, 4 zur Aufnahme von Transportgütern, wobei die Transportgüter in mindestens einer Transportkiste 16 innerhalb der Transportbox 2, 4 angeordnet sind, wobei die Transportbox 2, 4 eine zumindest abschnittsweise aufschwenkbare Abdeckung 14a-h zum Be- und Entladen aufweist. Weiterhin offenbart ist eine Transportbox 2, 4 welche eine zumindest abschnittsweise aufschwenkbare Abdeckung 14a-h zum Be- und Entladen aufweist.

### Bezugszeichenliste

- 1: Transportfahrrad
- 2: vordere Transportbox
- 4: hintere Transportbox
- 6: Fahrradlenker
- 8: Vorderrad
- 10: Hinterrad
- 12: Fahrradsitz
- 14a-h: Abdeckung
- 16: Transportkiste
- 18: Lagerebene
- 20: Lagerebene
- 22: Rutschbegrenzung
- 24: Rutschbegrenzung
- 26: Zuglasche
- 28a-c: Faltabschnitt
- 30: Ablagefach

## Patentansprüche

1. Transportfahrrad (1) mit zumindest einer Transportbox (2, 4) zur Aufnahme von Transportgütern, wobei die Transportgüter in mindestens einer Transportkiste (16) innerhalb der Transportbox (2, 4) angeordnet sind, **dadurch gekennzeichnet, dass** die Transportbox (2, 4) eine zumindest abschnittsweise aufschwenkbare Abdeckung (14a-h) zum Be- und Entladen aufweist.

2. Transportfahrrad nach Anspruch 1, wobei das Fahrrad zumindest eine vordere Transportbox (2) und mindestens eine hintere Transportbox (4) aufweist.

3. Transportfahrrad nach Anspruch 1 oder 2, mit einem Vorderrad (8) und zwei Hinterrädern (10), wobei die hintere Transportbox (4) im Bereich zwischen den Hinterrädern (10) angeordnet ist.

4. Transportfahrrad nach einem der vorhergehenden Ansprüche, wobei zumindest eine Transportbox (2, 4) zumindest zwei mindestens abschnittsweise aufschwenkbare Abdeckungen (14a-h) aufweist.

5. Transportfahrrad nach einem der vorhergehenden Ansprüche, wobei eine Transportbox (4) eine in Fahrtrichtung hintere Zugriffsöffnung mit zumindest einer Abdeckung (14d, 14e) und eine an der Oberseite angeordnete Zugriffsöffnung mit mindestens einer Abdeckung (14f-h) aufweist.

6. Transportfahrrad nach Anspruch 5, wobei die hintere Zugriffsöffnung eine obere, nach oben schwenkbare Abdeckung (14d) und eine untere, nach unten aufschwenkbare Abdeckung (14e) aufweist.

7. Transportfahrrad nach einem der Ansprüche 5 oder 6, wobei die an der Oberseite ausgebildete Zugriffsöffnung mittels zwei Abdeckungen (14g, 14f) verschließbar ist.

8. Transportfahrrad nach einem der Ansprüche 5 oder 6, wobei die an der Oberseite ausgebildete Zugriffsöffnung eine faltbare obere Abdeckung (14h) aufweist.

9. Transportfahrrad nach einem der vorhergehenden Ansprüche, wobei die hintere Transportbox (4) zumindest zwei horizontal übereinander angeordnete Lagerebenen (18, 20) zur Aufnahme von Transportkisten (16) aufweist.

10. Transportfahrrad nach Anspruch 9, wobei in zumindest einer der Lagerebenen (18, 20) zwei Transportkisten (16) benachbart hintereinander angeordnet sind.

11. Transportfahrrad nach einem der vorhergehenden Ansprüche, wobei zwei in Fahrtrichtung vordere Transportkisten (16) in Längsrichtung nebeneinander angeordnet sind.

12. Transportfahrrad nach einem der vorhergehenden Ansprüche, wobei eine in Fahrtrichtung hintere Transportkiste (16) quer zur Fahrtrichtung angeordnet ist.

13. Transportfahrrad nach einem der vorhergehenden Ansprüche, wobei die Transportbox (4) zumindest eine Zuglasche (26) aufweist und die Transportkiste (16) von der Zuglasche (26) abschnittsweise umgriffen und mittels dieser aus der Transportbox (4) herausziehbar ist.

14. Transportfahrrad nach einem der vorhergehenden Ansprüche, wobei die vordere Transportbox (2) zur Aufnahme von zumindest zwei Transportkisten (16) vorgesehen ist.

15. Transportfahrrad nach Anspruch 14, wobei die zwei Transportkisten (16) in Längsrichtung zur Fahrrichtung ausgerichtet, nebeneinander angeordnet sind.

16. Transportfahrrad nach einem Ansprüche 14 oder 15, wobei die vordere Transportbox (2) eine in Fahrtrichtung vorne angeordnete, sich über die gesamte Breite der Transportbox erstreckende erste Abdeckung (14a) und zwei benachbart hinter dieser angeordnete weitere Abdeckungen (14b, 14c) aufweist.

17. Transportfahrrad nach einem der vorhergehenden Ansprüche, wobei zumindest eine Abdeckung (14a-h) mittels eines Druckverschlusses arretierbar ist.

18. Transportbox für ein Transportfahrrad (1), wobei die Transportgüter in mindestens einer Transportkiste (16) innerhalb der Transportbox (2, 4) angeordnet sind, **dadurch gekennzeichnet, dass** die Transportbox (2, 4) eine zumindest abschnittsweise aufschwenkbare Abdeckung (14a-h) zum Be- und Entladen aufweist.
